# EUROPÄISCHE PATENTSCHRIFT

(11) **EP 1 687 350 B1**
(45) Veröffentlichungstag und Bekanntmachung des Hinweises auf die Patenterteilung: **17.12.2008**
(21) Anmeldenummer: 04791283.7
(22) Anmeldetag: 22.10.2004
(51) Int. Cl.: C08F 259/08

(54) **RADIKALISCH GEKOPPELTE PTFE-POLYMER-PULVER UND VERFAHREN ZU IHRER HERSTELLUNG**
RADICALLY COUPLED PTFE POLYMER POWDERS, AND METHOD FOR THE PRODUCTION THEREOF
POUDRES POLYMERES DE PTFE A COUPLAGE RADICALAIRE ET PROCEDE POUR LES PRODUIRE

(30) Priorität: 30.10.2003 DE 10351813
(43) Veröffentlichungstag der Anmeldung: 09.08.2006
(73) Patentinhaber: Leibniz-Institut für Polymerforschung Dresden e.V., 01069 Dresden (DE)
(72) Erfinder: LEHMANN, Dieter, 01640 Coswig (DE); KLÜPFEL, Bernd, 01277 Dresden (DE)
(74) Vertreter: Rauschenbach, Marion
(86) Internationale Anmeldenummer: PCT/EP2004/052620
(87) Internationale Veröffentlichungsnummer: WO 2005/042596

(56) Entgegenhaltungen:
- GB-A- 1 516 648
- US-A- 3 298 942
- US-A- 4 385 130
- US-B1- 6 387 964

## Beschreibung

Die Erfindung bezieht sich auf das Gebiet der Chemie und betrifft radikalisch gekoppelte PTFE-Polymer-Pulver, die beispielsweise als Tribowerkstoffe zur Anwendung kommen können und ein Verfahren zu ihrer Herstellung.

"Bei der Suche nach geeigneten Polymermaterialien für den Kernreaktorbau wurde festgestellt, dass PTFE - im Gegensatz zu seiner hohen chemischen und thermischen Stabilität - außerordentlich strahlenempfindlich ist. Es wird sowohl unter inerten Bedingungen als auch in Gegenwart von Sauerstoff schon bei geringer Energiedosis abgebaut, bereits bei 0,2 bis 0,3 kGy spröde und bei < 100 kGy bröckelig....
Ab etwa 360°C wird der rein strahlenchemische Abbau merklich von einem thermischen überlagert....
Wegen des stochastischen Verlaufs des strahlenchemischen Abbaus entstehen Reaktionsprodukte mit einem breiten Kettenlängenspektrum....
Bei Bestrahlung von PTFE in Gegenwart von Sauerstoff werden aus den zunächst entstehenden Perfluoralkylradikalen Peroxy- und Alkoxyradikale gebildet..
Über die Zwischenstufe der Bildung des Alkoxyradikals wird das endständige Perfluoralkylradikal unter Kettenverkürzung und Bildung von Carbonyldifluorid schrittweise abgebaut...

Dagegen entstehen aus den seitenständigen Alkoxyradikalen Perfluoralkansäurefluoride und endständige Perfluoralkylradikale ... 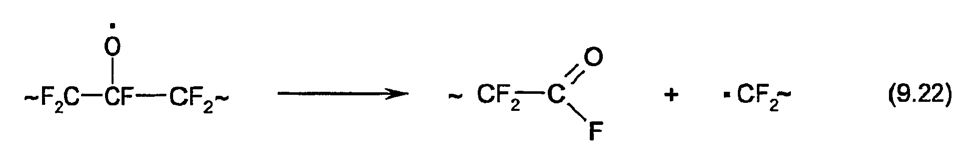 ...Ungesinterte und unverpresste PTFE-Emulsions- und -Suspensionspolymerisate sind von faserig-fitzigem Charakter. Eine Übertragung z. B. der antiadhäsiven und Gleiteigenschaften des PTFE auf andere Medien durch Einarbeitung in wäßrige oder organische Dispersionen, Polymere, Farben, Lacke, Harze oder Schmierstoffe ist nicht möglich, weil dieses PTFE sich nicht homogenisieren lässt, sondem zur Klumpenbildung neigt, agglomeriert, aufschwimmt oder sich absetzt.
Durch die Einwirkung energiereicher Strahlung mit einer Energiedosis von etwa 100 kGy wird aus den faserig-filzigen Polymerisaten infolge partiellen Abbaus der Polymerketten ein rieselfähiges Feinpulver erhalten. Dieses Pulver enthält noch lockere Agglomerate, die leicht zu Primärteilchen mit < 5 µm Partikeldurchmesser zerteilt werden können. Bei Bestrahlung in Gegenwart von Reaktanten werden funktionelle Gruppen in das Polymere eingebaut. Erfolgt die Bestrahlung in Luft, so werden nach GI. (9.22) (und anschließender Hydrolyse der-COF-Gruppen durch Luftfeuchtigkeit) Carboxylgruppen erhalten. Wird vor der Bestrahlung (NH₄)₂SO₃ zugemischt, dann sind S-haltige Gruppen zu erzielen. Diese funktionellen Gruppen mindern die Hydrophobie und Organophobie des PTFE so wesentlich, daß die gewonnenen Feinpulver gut mit anderen Medien homogenisiert werden können. Die positiven Eigenschaften des PTFE, wie die exzellenten Gleit-, Trenn- und Trockenschmiereigenschaften sowie die hohe chemische und thermische Stabilität, bleiben erhalten. Carboxyl- und Sulfogruppen, an die perfluorierte Kette gebunden, besitzen ebenfalls hohe chemische Inertheit....
Wegen der Unlöslichkeit des PTFE und seiner Abbauprodukte (mit Ausnahme der sehr niedermolekularen Produkte) können die üblichen Methoden der Molmassenbestimmung nicht angewandt werden. Die Molmassenbestimmung muß auf indirektem Wege erfolgen." [A. Heger et al., Technologie der Strahlenchemie an Polymeren, Akademie-Verlag Berlin 1990]

Nachteilig wirkt sich vielfach die Unverträglichkeit mit anderen Materialien aus. Durch eine chemische Aktivierung von PTFE durch die bekannten Verfahren mit (1.) Natriumamid in flüssigem Ammoniak und (2.) Alkalialkyl- und Alkali-Aromaten-Verbindungen in aprotischen inerten Lösungsmitteln ist eine Modifizierung zu erreichen. Über diese Modifizierungen können reaktiv oder auch nur über adsorptive Kräfte verbesserte Grenzflächenwechselwirkungen erreicht werden.

Die Verwertung der Produkte des PTFE-Abbaus erfolgt in vielfältigen Einsatzgebieten so auch als Additiv zu Kunststoffen zum Zwecke der Erzielung von Gleit- oder Antihafteigenschaften. Die Feinpulversubstanzen liegen mehr oder minder fein dispergiert als Füllstoffkomponente in einer Matrix vor [Ferse et al., Plaste u. Kautschuk, 29 (1982), 458; Ferse et al. DD-PS 146 7116 (1979)]. Beim Lösen der Matrixkomponente ist das PTFE-Feinpulver eliminierbar bzw. wird zurückerhalten.

Obwohl in den Einsatzgebieten von PTFE-Feinpulver eine Verbesserung der Eigenschaften im Vergleich zu den kommerziellen fluorcarbonfreien Additiven erreicht wird, ist die Unverträglichkeit, die Unlöslichkeit, die lockere Kopplung und auch inhomogene Verteilung für viele Einsatzgebiete von Nachteil.

Weiterhin bekannt sind gepfropfte fluorhaltige Kunststoffe (US 5,576,106), die aus fluorhaltigen Kunststoffpartikeln bestehen, an deren Oberfläche eine nichthomopolymerisierte ethylenisch ungesättigte Verbindung angepfropft ist. Dabei können die nichthomopolymerisierten ethylenisch ungesättigten Verbindungen Säuren, Ester oder Anhydride sein.
Hergestellt werden diese gepfropften fluorhaltigen Kunststoffe, indem das fluorhaltige Kunststoffpulver in Gegenwart einer ethylenisch ungesättigten Verbindung einer Quelle von ionisierender Strahlung ausgesetzt wird. Dabei erfolgt die Anbindung der ethylenisch ungesättigten Verbindung an die Oberfläche der fluorhaltigen Kunststoffpartikel.

Aufgabe der Erfindung ist es, radikalisch gekoppelte PTFE-Polymer-Pulver anzugeben, welche nach Einarbeitung in eine Matrix als PTFE-Polymer-Compound bei vergleichbaren Gleiteigenschaften verbesserte Verschleißfestigkeiten aufweisen und dadurch die Lebensdauer der Bauteile aus diesem Compound verlängert ist, und weiterhin ein einfaches und leistungsfähiges Verfahren zur Herstellung derartiger radikalisch gekoppelter PTFE-Polymer-Pulver anzugeben.

Die Aufgabe wird durch die in den Ansprüchen angegebene Erfindung gelöst. Weiterbildungen sind Gegenstand der Unteransprüche.

Die erfindungsgemäßen radikalisch gekoppelten PTFE-Polymer-Pulver sind erhältlich durch strahlenchemische und/oder plasmachemische Modifizierung von PTFE-Pulvern unter Sauerstoffeinfluss und reaktiver Umsetzung der modifizierten PTFE-Pulver mit Styrol, Acrylnitril, Maleinsäureanhydrid, Acrylsäure, Methyl(meth)acrylat, Vinylacetat, Glycidylmethacrylat, (Meth)Acrylamid-Verbindungen oder deren Gemische als polymerisierbare, olefinisch ungesättigte Monomere in Dispersion oder in Substanz, wobei an der Partikeloberfläche Homo-, Co- oder Ter-Polymere der polymerisierbaren, olefinisch ungesättigten Monomere radikalisch gekoppelt werden.

Vorteilhafterweise ist das PTFE-Pulver strahlenchemisch modifiziert.

Ebenfalls vorteilhaft ist das PTFE-Pulver mit einer Strahlendosis von größer 50 kGy und vorzugsweise mit einer Strahlendosis von größer 100 kGy strahlenchemisch modifiziert.

Bei dem erfindungsgemäßen Verfahren zur Herstellung von radikalisch gekoppelten PTFE-Polymer-Pulver wird PTFE-Pulver mit reaktiven Perfluoralkyl-(peroxy-)Radikal-Zentren nach einer strahlenchemischen und/oder plasmachemischen Modifizierung in Dispersion oder in Substanz unter Zugabe von polymerisierbaren, olefinisch ungesättigten Monomeren reaktiv umgesetzt. Dabei wird während der reaktiven Umsetzung eine Polymeraufbaureaktion zu Homo-, Co- oder Ter-Polymeren am PTFE realisiert.

Auch von Vorteil ist es, wenn die PTFE-Pulver mit reaktiven Perfluoralkyl-(peroxy-)Radikal-Zentren nach einer strahlenchemischen und/oder plasmachemischen Modifizierung einem Tempern bei niedrigen Temperaturen unter Erhalt der reaktiven Perfluoralkyl-(peroxy-)Radikal-Zentren unterzogen werden.

Vorteilhafterweise wird strahlenchemisch modifiziertes PTFE-Pulver eingesetzt.

Ebenfalls vorteilhafterweise wird PTFE-Pulver mit einer Strahlendosis von größer 50 kGy und vorzugsweise mit einer Strahlendosis von größer 100 kGy strahlenchemisch modifiziert.

Weiterhin ist es von Vorteil, wenn das PTFE-Pulver als Mikropulver eingesetzt wird.

Und auch von Vorteil ist es, wenn die Reaktion in einem Autoklav oder in einem Rührreaktor oder in einem Extruder/Kneter realisiert wird.

Ebenfalls von Vorteil ist es, wenn eine Mischung aus Monomeren eingesetzt wird.

Es ist auch von Vorteil, wenn als polymerisierbare, olefinisch ungesättigte Monomere Makromere und/oder Oligomere eingesetzt werden.

Weiterhin von Vorteil ist es, wenn die PTFE-Polymer-Pulver mit funktionellen Gruppen versehen sind, die in nachfolgenden Reaktionen mit weiteren niedermolekularen und/oder oligomeren und/oder polymeren Substanzen reaktiv umgesetzt werden, wie vorteilhafterweise über Compoundierung in Kunststoffe/Polymere oder durch Einarbeitung in Elastomere und/oder Thermoplaste und/oder Duromere und/oder Mischungen daraus.

Die erfindungsgemäße radikalische Kopplung von PTFE-(Mikro-)Pulvem mit Monomeren unter Bildung von gepfropften Homo-, Co- oder Ter-Polymeren auf der PTFE-Partikeloberfläche in Dispersion oder in Substanz führt zu PTFE-Polymer-Pulvern, die gezielt für die Kompatibilisierung und feste Einbindung in die Matrix eingestellt werden können, was vorteilhaft für Tribowerkstoffe ausgenutzt werden kann. So können spezielle Pfropfäste an die PTFE-Partikeloberfläche anpolymerisiert werden, die in einer Compoundierung mit Thermoplasten, Elastomeren und/oder Duromeren mit diesem erfindungsgemäß modifizierten PTFE-Polymer-Pulver eine sehr gute Verträglichkeit und Wechselwirkung oder auch eine chemische Anbindung an Funktionalitäten der Pfropfäste zeigen. Dadurch können spezielle Tribowerkstoffe hergestellt werden, die neben einer vergleichbaren Gleitreibung über eine erhöhte Verschleißfestigkeit verfügen - im Vergleich zu den reinen Ausgangsstoffen und den physikalischen Mischungen mit PTFE.

Unter der Dispersion soll erfindungsgemäß verstanden werden, dass das PTFE-(Mikro-)Pulver in einer Flüssigkeit ungelöst vorliegt und das Monomer-(Gemisch) die Flüssigkeit bildet oder gelöst in der Flüssigkeit vorliegt. Im Unterschuss an Flüssigkeit kann die Dispersion auch als pastöse Masse vorliegen.
Als radikalische Kopplung/reaktive Umsetzung in Substanz wird verstanden, dass das PTFE-(Mikro-)Pulver als verwirbeltes oder fluidisiertes PTFE-(Mikro-)Pulver vorteilhafterweise unter Inertgas in Gegenwart eines Monomer-(Gemisches) zum PTFE-Polymer-Pulver umgesetzt wird.

In der vorzugsweise strahlenchemischen Modifizierung von PTFE zu PTFE-(Mikro-) Pulvern entstehen bevorzugt persistente (langlebige) reaktive Perfluoralkyl-(peroxy-)Radikal-Zentren, die überraschenderweise zur Kopplung mit polymerisierbaren, olefinisch ungesättigten Monomeren in einer reaktiven Umsetzung befähigt sind. Mit einer Plasmabehandlung können oberflächlich ähnliche reaktive Perfluoralkyl-(peroxy-)Radikal-Zentren erzeugt und für diese Kopplungsreaktion eingesetzt werden, jedoch sind diese reaktiven Perfluoralkyl-(peroxy-)Radikal-Zentren in ihrer Verteilung und Dichte im Vergleich zu den strahlenchemisch hergestellten reaktiven Perfluoralkyl-(peroxy-)Radikal-Zentren nicht optimal. So konnte über IR-Spektroskopie nach der PTFE-(Mikro-)Pulvermodifizierung mit Monomeren in Dispersion oder in Substanz nach Abtrennung und Reinigung dieser PTFE-Pulver eine chemische Kopplung von Homo-, Co- oder Terpolymeren je nach Einstellung des Modifizierungsansatzes nachgewiesen werden, d. h. die Polymerketten waren über Extraktion vom PTFE nicht mehr abtrennbar. Im Vergleich zu unbestrahlten PTFE-(Mikro-)Pulvern ohne reaktive Perfluoralkyl-(peroxy-)Radikal-Zentren oder auch in Gegenwart von ungebundenen Radikalinitiatoren bilden sich keine gepfropften/oberflächenmodifizierten PTFE-(Mikro-)Pulver. Dieses PTFE-(Mikro-)Pulver konnte unverändert quantitativ abgetrennt werden. Die erfindungsgemäße radikalische Kopplung von Monomer-(Gemisch)(en) am PTFE-(Mikro-)Pulver führt zu einer Oberflächenmodifizierung des PTFE in der Form, so dass das Polymer an das PTFE gepfropft vorliegt. Entsprechend der anpolymerisierten Pfropfpolymerstruktur ist für den Fachmann jeweils ableitbar, ob über eine Kompatibilisierung und/oder in einer folgenden chemischen Umsetzung/Modifizierung mit Polymeren die reaktive Einbindung/Kompatibilisierung dieser PTFE-Polymer-Pulver mit der Matrix eines andersartigen Polymers realisiert wird, die zu einer Verbesserung der Materialeigenschaften sowie zur Erhöhung der Verschleißfestigkeit im Vergleich zu den unmodifizierten Ausgangsstoffen und den physikalischen Mischungen mit unmodifiziertem PTFE führt. Zur Verbesserung der Verschleißfestigkeit ist es weiter vorteilhaft, die radikalisch gekoppelten PTFE-Partikel gleichzeitig als Speichermedium für PFPE-Additive (PFPE = Perfluorpolyether) zu nutzen, welches mit der Matrix unverträglich ist und zur Erniedrigung des Reibungskoeffizienten bei gleichzeitiger Erhöhung der Verschleißfestigkeit beiträgt.

Ein weiterer Vorteil der Erfindung besteht darin, dass die Pfropfäste am PTFE-Partikel reaktive Zentren besitzen, die über eine nachfolgende Modifizierung nach bekannten Syntheseschritten zu PTFE-Polymer-Produkten führt, die nach dem Stand der Technik nicht herstellbar waren.

Erfindungsgemäß hergestellt werden die radikalisch gekoppelten PTFE-Polymer-Pulver, indem beispielsweise ein PTFE-Emulsionspolymerisat (TF 2025 von Dyneon) mit 200 kGy und ein PTFE-Suspensionspolymerisat (TF 1750 von Dyneon) an Luft mit 500 kGy bestrahlt werden. Während der Bestrahlung in 50 kGy-Schritten unter Abbau zu PTFE-Mikropulver werden reaktiven Perfluoralkyl-(peroxy-)Radikal-Zentren erzeugt, die in Gegenwart von Luft sich teilweise in relativ stabile/langlebige Peroxyradikale umwandeln.
Nach dem Stand der Technik ist bekannt, dass diese PTFE-(Mikro-)Pulver getempert werden können. Dadurch werden die reaktiven Perfluoralkyl-(peroxy-)Radikal-Zentren insbesondere mit steigenden Temperaturen zerstört [K. Schierholz u. a., J. Polym. Sci. Part B, Polymer Physics, Vol. 37, 2404-2411 (1999)].
Bei dem erfindungsgemäßen Verfahren werden PTFE-(Mikro-)Pulver mit den entstandenen reaktiven Perfluoralkyl-(peroxy-)Radikal-Zentren eingesetzt.

Die reaktiven Perfluoralkyl-(peroxy-)Radikal-Zentren werden gezielt für die Kopplung mit polymerisierbaren, olefinisch ungesättigten Monomeren zu gepfropften Homo-, Co- oder Ter-Polymeren genutzt, indem in der Modifizierungsreaktion diese PTFE-(Mikro-)Pulver mit Monomer-(Gemisch)(en) in Dispersion oder in Substanz über eine radikalische Kopplung zu chemisch gekoppelten PTFE-Pfropf-Copolymer-Materialien, d. h. PTFE-Polymer-Pulvern umgesetzt werden. Diese PTFE-Polymer-Pulver werden als Ausgangsstoff für Folgeoperationen (Verpressen der Pulver, Compoundieren/Mischen mit anderen Polymeren und/oder reaktives Koppeln mit weiteren Substanzen und/oder Polymeren, wenn der Pfropfast entsprechende funktionelle Gruppen besitzt) eingesetzt. Durch die Pfropfung weisen diese Produkte verbesserte mechanische und tribologische Eigenschaften auf. Diese Produkte besitzen vor allem Interesse, bei denen Gleitreibungsprozesse eine Rolle spielen. Durch die chemische Modifizierung/Kompatibilisierung des PTFE-Partikels mit dem Polymer-Matrix-Material wird eine gute Anbindung und eine Verbesserung der Verschleißfestigkeit erreicht, da das PTFE-Korn bei mechanischer Beanspruchung nicht aus dem Matrix-Material herausgerieben werden kann.
Da das oberflächenmodifizierte PTFE-Korn mit den gepfropften Polymerästen in direkter Wechselwirkung mit der Matrix steht, werden im Vergleich zu den physikalischen Mischungen je nach Anbindungsgrad auch verbesserte Materialeigenschaften beobachtet.

Mit der chemischen Oberflächenmodifizierung des PTFE-Mikropulvers und Ver-/Einarbeitung in andere Polymere werden neue Materialien erhalten, die bei vergleichbaren Gleitreibungskoeffizienten verbesserte Verschleißfestigkeiten, d. h. eine erhöhte Lebensdauer in den Anwendungen aufweisen. Ferner wird durch Zugabe von PFPE eine Erniedrigung der Gleitreibungskoeffizienten und eine spürbare Verbesserung der Verschleißfestigkeit erzielt, wobei das reaktiv kompatibilisierte PTFE zusätzlich als Speichermedium fungiert.

Im weiteren wird die Erfindung an mehreren Ausführungsbeispielen näher erläutert.

### Vergleichsbeispiel 1: Modifizierung von unbestrahlten PTFE-Mikropulvern mit Styrol

In einem Literkolben werden 100 g thermisch abgebautes PTFE-Polymerisat (TF 9205 von Dyneon, unbestrahlt) in 500 ml DMAc bei Raumtemperatur dispergiert/gerührt, entgast und mit Stickstoff gespült. Die PTFE-DMAc-Dispersion wird auf 100°C erwärmt und 100 ml Styrol (frisch destilliert) zudosiert und 2 Stunden bei 100°C gerührt. Der Feststoff wird abgetrennt und dreimal mit je 500 ml DMAc und danach dreimal mit je 500 ml Methylenchlorid gewaschen und getrocknet.
Die Fällung der abgetrennten Lösung ergab, dass sich (nahezu) kein ungebundenes Styrol-Homopolymer gebildet hat, d. h. eine Styrolpolymerisation hat weder am PTFE noch im Lösungsmittel stattgefunden. Die IR-spektroskopische Untersuchung der abgetrennten und gereinigten PTFE-Mikropulver ergab reines/unmodifiziertes PTFE, d. h. es fand keine Pfropfreaktion zwischen PTFE und Styrol statt. Es werden keine Polystyrol-Absorptionen im IR-Spektrum gefunden.

### Beispiel 1: Modifizierung von PTFE-Emulsionspolymerisat (bestrahlt mit 500kGy) mit Styrol

Versuchsdurchführung und Aufarbeitung erfolgte analog Vergleichsbeispiel 1, es werden jedoch 100 g PTFE-Emulsionspolymerisat (TF 2025 von Dyneon), die mit 500 kGy bestrahlt wurden, verwendet.
Die IR-spektroskopische Untersuchung des gereinigten PTFE-Mikropulvers ergab sehr starke Polystyrol-Absorptionen neben dem PTFE als Nachweis für chemisch gekoppeltes PTFE-Polystyrol-Material. Im Vergleichsbeispiel 1 war nur reines PTFE im IR-Spektrum nachweisbar.
Nach der Einarbeitung von 15 Ma.-% modifiziertem PTFE-Mikropulver in SBS in einem Laborkneter und Herstellung von Probekörpern ergaben die tribologischen Untersuchungen, dass das gepfropfte PTFE-Polystyrol-Material einen vergleichbaren Gleitreibungskoeffzienten zu der physikalischen Mischung aufweist, dass aber eine wesentlich erhöhte Verschleißfestigkeit zu beobachten ist. Der Verschleiß beim Klötzchen/Ring-Versuch mit dem kompatibilisierten Material weist eine Senkung auf 60 % im Vergleich zu dem Material aus Vergleichsbeispiel 1 auf.

### Beispiel 2: Modifizierung von PTFE-Suspensionspolymerisat (bestrahlt mit 500kGy) mit Styrol

Versuchsdurchführung und Aufarbeitung erfolgte analog Vergleichsbeispiel 1, es werden jedoch 100 g PTFE-Suspensionspolymerisat (TF 1750 von Dyneon), die mit 500 kGy bestrahlt wurden, verwendet.
Die IR-spektroskopische Untersuchung des gereinigten PTFE-Mikropulvers ergab starke Polystyrol-Absorptionen neben dem PTFE als Nachweis für chemisch gekoppeltes PTFE-Polystyrol-Material. Im Vergleichsbeispiel 1 war nur reines PTFE im IR-Spektrum nachweisbar.
Nach der Einarbeitung von 15 Ma.-% modifiziertem PTFE-Mikropulver in SBS in einem Laborkneter und Herstellung von Probekörpern ergaben die tribologischen Untersuchungen, dass das gepfropfte PTFE-Polystyrol-Material einen vergleichbaren Gleitreibungskoeffizienten zu der physikalischen Mischung aufweist, dass aber eine wesentlich erhöhte Verschleißfestigkeit zu beobachten ist. Der Verschleiß beim Kiötzchen/Ring-Versuch mit dem Kompatibilisierten Material weist eine Senkung auf 65 % im Vergleich zu dem Material aus Vergleichsbeispiel 1 auf.

### Vergleichsbeispiel 2: Modifizierung von unbestrahlten PTFE-Mikropulvern mit einem Gemisch aus Styrol und Acrylnitril

In einem Literkolben werden 100 g thermisch abgebautes PTFE-Polymerisat (TF 9205 von Dyneon, unbestrahlt) in 500 ml DMAc bei Raumtemperatur dispergiert/gerührt, entgast und mit Stickstoff gespült. Die PTFE-DMAc-Dispersion wird auf 100°C erwärmt, und es werden 50 ml Styrol und 40 ml Acrylnitril (beide frisch destilliert) zudosiert und 2 Stunden unter Rückfluss bei 100°C gerührt. Der Feststoff wird abgetrennt und dreimal mit je 500 ml DMAc und danach dreimal mit je 500 ml Methylenchlorid gewaschen und getrocknet.
Die Fällung der abgetrennten Lösung ergab, dass sich (nahezu) kein ungebundenes Styrol-/SAN-Homopolymer gebildet hat, d. h. eine Styrol-/SAN-Polymerisation hat weder am PTFE noch im Lösungsmittel stattgefunden. Die IR-spektroskopische Untersuchung der abgetrennten und gereinigten PTFE-Mikropulver ergab reines/unmodifiziertes PTFE, d. h. es fand keine Pfropfreaktion zwischen PTFE und den Monomeren statt. Es werden keine SAN-Absorptionen im IR-Spektrum gefunden.

### Beispiel 3: Modifizierung von PTFE-Emulsionspolymerisat (bestrahlt mit 500kGy) mit Styrol/Acrylnitril

Versuchsdurchführung und Aufarbeitung erfolgte analog Vergleichsbeispiel 2, es werden jedoch 100 g PTFE-Emulsionspolymerisat (TF 2025 von Dyneon), die mit 500 kGy bestrahlt wurden, verwendet. Die Fällung der abgetrennten Lösung ergab, dass sich (nahezu) kein ungebundenes Styrol-/SAN-Homopolymer gebildet hat.
Die IR-spektroskopische Untersuchung des gereinigten PTFE-Mikropulvers ergab sehr starke SAN-Absorptionen neben dem PTFE als Nachweis für chemisch gekoppeltes PTFE-SAN-Material. Im Vergleichsbeispiel 2 war nur reines PTFE im IR-Spektrum nachweisbar.
Nach der Einarbeitung von 15 Ma.-% modifiziertem PTFE-Mikropulver in ABS in einem Laborkneter und Herstellung von Probekörpern ergaben die tribologischen Untersuchungen, dass das gepfropften PTFE-SAN-Material einen vergleichbaren Gleitreibungskoeffizienten zu der physikalischen Mischung aufweiset, dass aber eine wesentlich erhöhte Verschleißfestigkeit zu beobachten ist. Der Verschleiß beim Klötzchen/Ring-Versuch mit den chemisch gekoppelten Material weist eine Senkung auf 50 % im Vergleich zu dem Material aus Vergleichsbeispiel 2 auf.
Die weiterführenden tribologischen Untersuchungen an der Probe, zu der während der Einarbeitung in die ABS-Matrix noch 0,5 Ma.-% PFPE (Perfluorpolyether, DuPont) zugegeben wurde, ergab, dass diese Probekörper einen Gleitreibungskoeffizient im Vergleich zu den nur chemisch gekoppelten Material um ca. 45 % niedrigere Werte aufweisen und dass eine Zunahme der Verschleißfestigkeit zu beobachten ist. Der Verschleiß beim Klötzchen/Ring-Versuch mit dem chemisch gekoppelten Material und mit PFPE modifizierten Materialien wies eine Senkung auf 20 % im Vergleich zu dem Material ohne PFPE-Zusatz auf.

### Beispiel 4: Modifizierung von PTFE-Suspensionspolymerisat (bestrahlt mit 500kGy) mit Styrol/Acrylnitril

Versuchsdurchführung und Aufarbeitung erfolgte analog Vergleichsbeispiel 2, es werden jedoch 100 g PTFE-Suspensionspolymerisat (TF 1750 von Dyneon), die mit 500 kGy bestrahlt wurden verwendet. Die Fällung der abgetrennten Lösung ergab, dass sich (nahezu) kein ungebundenes Styrol-/SAN-Homopolymer gebildet hat.
Die IR-spektroskopische Untersuchung des gereinigten PTFE-Mikropulvers ergab starke SAN-Absorptionen neben dem PTFE als Nachweis für chemisch gekoppeltes PTFE-SAN-Material. Im Vergleichsbeispiel 2 war nur reines PTFE im IR-Spektrum nachweisbar.
Nach der Einarbeitung von 15 Ma.-% modifiziertem PTFE-Mikropulver in ABS in einem Laborkneter und Herstellung von Probekörpern ergaben die tribologischen Untersuchungen, dass das gepfropften PTFE-SAN-Material einen vergleichbaren Gleitreibungskoeffizienten zu der physikalischen Mischung aufweist, dass aber eine wesentlich erhöhte Verschleißfestigkeit zu beobachten ist. Der Verschleiß beim Klötzchen/Ring-Versuch mit den chemisch gekoppelten Material weist eine Senkung auf 63 % im Vergleich zu den Material aus Vergleichsbeispiel 2 auf.
Die weiterführenden tribologischen Untersuchungen an der Probe, zu der während der Einarbeitung in die ABS-Matrix noch 0,5 Ma.-% PFPE (Perfluorpolyether, DuPont) zugegeben wurde, ergab, dass diese Probekörper einen Gleitreibungskoeffizient im Vergleich zu den nur chemisch gekoppelten Material um ca. 45 % niedrigere Werte aufweisen und dass eine Zunahme der Verschleißfestigkeit zu beobachten ist. Der Verschleiß beim Klötzchen/Ring-Versuch mit dem chemisch gekoppelten Material und mit PFPE modifizierten Materialien wies eine Senkung auf 18 % im Vergleich zu dem Material ohne PFPE-Zusatz auf.

### Vergleichsbeispiel 3: Modifizierung von unbestrahlten PTFE-Mikropulvern mit einem Gemisch aus Styrol und Maleinsäureanhydrid

In einem Literkolben werden 100 g thermisch abgebautes PTFE-Polymerisat (TF 9205 von Dyneon, unbestrahlt) in 500 ml DMAc bei Raumtemperatur dispergiert/gerührt, entgast und mit Stickstoff gespült. Die PTFE-DMAc-Dispersion wird auf 100°C erwärmt, und es werden 50 ml Styrol (frisch destilliert) und 50 g Maleinsäureanhydrid zudosiert und 2 Stunden bei 100°C gerührt. Der Feststoff wird abgetrennt und dreimal mit je 500 ml DMAc und danach dreimal mit je 500 ml Methylenchlorid gewaschen und getrocknet.
Die Fällung der abgetrennten Lösung ergab, dass sich (nahezu) kein ungebundenes Styrol-Maleinsäureanhydrid-Copolymer (SMAn) gebildet hat, d. h. eine SMAn-Polymerisation hat weder am PTFE noch im Lösungsmittel stattgefunden. Die IR-spektroskopische Untersuchung der abgetrennten und gereinigten PTFE-Mikropulver ergab reines/unmodifiziertes PTFE, d. h. es fand keine Pfropfreaktion zwischen PTFE und SMAn statt. Es werden keine SMAn-Absorptionen im IR-Spektrum gefunden.

### Beispiel 5: Modifizierung von PTFE-Emulsionspolymerisat (bestrahlt mit 500kGy) mit Styrol/Maleinsäureanhydrid

Versuchsdurchführung und Aufarbeitung erfolgte analog Vergleichsbeispiel 3, es werden jedoch 100 g PTFE-Emulsionspolymerisat (TF 2025 von Dyneon), die mit 500 kGy bestrahlt wurden, verwendet. Die Fällung der abgetrennten Lösung ergab, dass sich (nahezu) kein ungebundenes SMAn-Homopolymer gebildet hat.
Die IR-spektroskopische Untersuchung des gereinigten PTFE-Mikropulvers ergab sehr starke SMAn-Absorptionen neben dem PTFE als Nachweis für chemisch gekoppeltes PTFE-SMAn-Material. Im Vergleichsbeispiel 3 war nur reines PTFE im IR-Spektrum nachweisbar.
Nach der Einarbeitung von 15 Ma.-% modifiziertem PTFE-Mikropulver in PA-6 in einem Laborkneter und Herstellung von Probekörpern ergaben die tribologischen Untersuchungen, dass das gepfropfte PTFE-SMAn-Material in PA-6 einen vergleichbaren Gleitreibungskoeffizient zu der physikalischen Mischung aufweist, dass aber eine wesentlich erhöhte Verschleißfestigkeit zu beobachten ist. Der Verschleiß beim Klötzchen/Ring-Versuch mit dem chemisch gekoppelten Material weist eine Senkung auf 55 % inn Vergleich zu dem Material aus Vergleichsbeispiel 3 auf.
Die Abtrennung der ungebundenen PA-6-Matrix vom PTFE-Feststoff mittels Lösen in Ameisensäure und Zentrifugieren ergab im IR-Spektrum, dass zusätzlich starke PA-Absorptionen beobachtet wurden. Das PA-6 war vom Feststoff nach 5-maliger Trennoperation nicht abtrennbar, d. h. durch die reaktive Umsetzung während der Compoundierung des PTFE-Polymer-Pulvers [PTFE-SMAn] mit PA-6 fand eine chemische Kopplung und Kompatibilisierung statt.
Die weiterführenden tribologischen Untersuchungen an dieser Probe, zu der während der Einarbeitung in die PA-6-Matrix noch 0,5 Ma.-% PFPE (Perfluorpolyether, DuPont) zugegeben wurde, ergaben, dass diese Probekörper Gleitreibungskoeffizienten im Vergleich zu dem nur chemisch gekoppelten Material einen um ca. 50 % niedrigeren Wert aufweist und dass eine Zunahme der Verschleißfestigkeit zu beobachten ist. Der Verschleiß beim Klötzchen/Ring-Versuch mit dem chemisch gekoppelten Material und dem mit PFPE modifizierten Material weist eine Senkung des Verschleißes auf 70 % im Vergleich zu dem chemisch gekoppelten Material auf.

### Beispiel 6: Modifizierung von PTFE-Suspensionspolymerisat (bestrahlt mit 500kGy) mit Styrol/Maleinsäureanhydrid

Versuchsdurchführung und Aufarbeitung erfolgte analog Vergleichsbeispiel 3, es werden jedoch 100 g PTFE-Suspensionspolymerisat (TF 1750 von Dyneon), die mit 500 kGy bestrahlt wurden, verwendet. Die Fällung der abgetrennten Lösung ergab, dass sich (nahezu) kein ungebundenes Styrol-/SMAn -Homopolymer gebildet hat.
Die IR-spektroskopische Untersuchung des gereinigten PTFE-Mikropulvers ergab starke SMAn-Absorptionen neben dem PTFE als Nachweis für chemisch gekoppeltes PTFE-SMAn-Material. Im Vergleichsbeispiel 3 war nur reines PTFE im IR-Spektrum nachweisbar.
Nach der Einarbeitung von 15 Ma.-% modifiziertem PTFE-Mikropulver in PA-6 in einem Laborkneter und Herstellung von Probekörpern ergaben die tribologischen Untersuchungen, dass das gepfropfte PTFE-SMAn-Material in PA-6 einen vergleichbaren Gleitreibungskoeffizient zu der physikalischen Mischung aufweist, dass aber eine wesentlich erhöhte Verschleißfestigkeit zu beobachten ist. Der Verschleiß beim Klötzchen/Ring-Versuch mit dem chemisch gekoppelten Material weist eine Senkung auf 58 % im Vergleich zu dem Material aus Vergleichsbeispiel 3 auf.
Die Abtrennung der ungebundenen PA-6-Matrix vom PTFE-Feststoff mittels Lösen in Ameisensäure und Zentrifugieren ergab im IR-Spektrum, dass zusätzlich starke PA-Absorptionen beobachtet wurden. Das PA-6 war vom Feststoff nach 5-maliger Trennoperation nicht abtrennbar, d. h. durch die reaktive Umsetzung während der Compoundierung des PTFE-Polymer-Pulvers [PTFE-SMAn] mit PA-6 fand eine chemische Kopplung und Kompatibilisierung statt.
Die weiterführenden tribologischen Untersuchungen an dieser Probe, zu der während der Einarbeitung in die PA-6-Matrix noch 0,5 Ma.-% PFPE (Perfluorpolyether, DuPont) zugegeben wurde, ergaben, dass diese Probekörper Gleitreibungskoeffizienten im Vergleich zu dem nur chemisch gekoppelten Material einen um ca. 50 % niedrigeren Wert aufweist und dass eine Zunahme der Verschleißfestigkeit zu beobachten ist. Der Verschleiß beim Klötzchen/Ring-Versuch mit dem chemisch gekoppelten Material und dem mit PFPE modifizierten Material weist eine Senkung des Verschleißes auf 63 % im Vergleich zu dem chemisch gekoppelten Material auf.

### Vergleichsbeispiel 4: Modifizierung von unbestrahlten PTFE-Mikropulvem mit Glycidylmethacrylat (GMA)

In einem Literkolben werden 100 g thermisch abgebautes PTFE-Polymerisat (TF 9205 von Dyneon, unbestrahlt) in 500 ml DMAc bei Raumtemperatur dispergiert/gerührt, entgast und mit Stickstoff gespült. Die PTFE-DMAc-Dispersion wird auf 100°C erwärmt, und es werden 60 ml GMA (frisch destilliert) zudosiert und 2 Stunden bei 100°C gerührt. Der Feststoff wird abgetrennt und dreimal mit je 500 ml DMAc und danach dreimal mit je 500 ml Methanol gewaschen und getrocknet.
Die Fällung der abgetrennten Lösung ergab, dass sich etwas ungebundenes GMA-Homopolymer gebildet hat, d. h. eine GMA-Polymerisation hat weder am PTFE noch im Lösungsmittel stattgefunden. Die IR-spektroskopische Untersuchung der abgetrennten und gereinigten PTFE-Mikropulver ergab reines/unmodifiziertes PTFE, d. h. es fand keine Pfropfreaktion zwischen PTFE und GMA statt. Es werden keine Poly-GMA-Absorptionen im IR-Spektrum gefunden.

### Beispiel 7: Modifizierung von PTFE-Emulsionspolymerisat (bestrahlt mit 500kGy) mit Glycidylmethacrylat (GMA)

Versuchsdurchführung und Aufarbeitung erfolgte analog Vergleichsbeispiel 4, es werden jedoch 100 g PTFE-Emulsionspolymerisat (TF 2025 von Dyneon), die mit 500 kGy bestrahlt wurden, verwendet.
Die IR-spektroskopische Untersuchung des gereinigten PTFE-Mikropulvers ergab sehr starke Poly-GMA-Absorptionen neben dem PTFE als Nachweis für chemisch gekoppeltes PTFE-Poly-GMA-Material. Im Vergleichsbeispiel 4 war nur reines PTFE im IR-Spektrum nachweisbar.
Nach der Einarbeitung von 15 Ma.-% des modifizierten PTFE-Mikropulvers in ein Epoxidharz und nach der Vernetzung in Form einer Platte und Herstellung von Probekörpern ergaben die tribologischen Untersuchungen, dass das gepfropfte PTFE-Poly-GMA-Material einen vergleichbaren Gleitreibungskoeffizient zu der physikalischen Mischungen aufweist, dass aber eine erhöhte Verschleißfestigkeit zu beobachten ist. Der Verschleiß beim Klötzchen/Ring-Versuch mit dem chemisch gekoppelten Material wies eine Senkung auf 65 % im Vergleich zu dem Material aus Vergleichsbeispiel 4 auf.
Die weiterführenden tribologischen Untersuchungen an dieser Probe, zu der während der Einarbeitung in die Epoxidharz-Matrix noch 0,5 Ma.-% PFPE (Perfluorpolyether, DuPont) zugegeben wurde, ergaben, dass diese Probekörper einen Gleitreibungskoeffizienten im Vergleich zu dem nur chemisch gekoppelten Material um ca. 35 % niedrigere Werte aufweist und dass eine Zunahme der Verschleißfestigkeit zu beobachten ist. Der Verschleiß beim Klötzchen/Ring-Versuch mit dem chemisch gekoppelten Material und mit dem mit PFPE modifizierten Material wies eine Senkung des Verschleißes auf 55 % im Vergleich zu dem chemisch gekoppelten Material auf.
Nach der Einarbeitung von 15 Ma.-% modifiziertem PTFE-Mikropulver in eine Polyhamstoffharzmischung und nach der Vernetzung in Form einer Platte und Herstellung von Probekörpern ergaben die tribologischen Untersuchungen, dass das gepfropfte PTFE-Poly-GMA-Material in Polyharnstoff vergleichbare Gleitreibungskoeffizienten zu der physikalischen Mischung aufweist, dass aber eine erhöhte Verschleißfestigkeit zu beobachten ist. Der Verschleiß beim Klötzchen/Ring-Versuch mit den chemisch gekoppelten Material weist eine Senkung auf 42 % im Vergleich zu dem Material aus Vergleichsbeispiel 4 auf.
Die weiterführenden tribologischen Untersuchungen an dieser Probe, zu der während der Einarbeitung in die Polyhamstoffharz-Matrix noch 0,5 Ma.-% PFPE (Perfluorpolyether, DuPont) zugegeben wurde, ergaben, dass diese Probekörper einen Gleitreibungskoeffizienten im Vergleich zu dem nur chemisch gekoppelten Material um ca. 45 % niedrigere Werte aufweist und dass eine Zunahme der Verschleißfestigkeit zu beobachten ist Der Verschleiß beim Klötzchen/Ring-Versuch mit dem chemisch gekoppelten Material und dem mit PFPE modifizierten Material wies eine Senkung auf 35 % im Vergleich zu dem chemisch gekoppelten Material auf.

### Beispiel 8: Modifizierung von PTFE-Suspensionspolymerisat (bestrahlt mit 500kGy) mit Glycidylmethacrylat (GMA)

Versuchsdurchführung und Aufarbeitung erfolgte analog Vergleichsbeispiel 4, es werden jedoch 100 g PTFE-Suspensionspolymerisat (TF 1750 von Dyneon), die mit 500 kGy bestrahlt wurden, verwendet.
Die IR-spektroskopische Untersuchung des gereinigten PTFE-Mikropulvers ergab starke Poly-GMA-Absorptionen neben dem PTFE als Nachweis für chemisch gekoppeltes PTFE-Poly-GMA-Material. Im Vergleichsbeispiel 4 war nur reines PTFE im IR-Spektrum nachweisbar.
Nach der Einarbeitung von 15 Ma.-% des modifizierten PTFE-Mikropulvers in ein Epoxidharz und nach der Vernetzung in Form einer Platte und Herstellung von Probekörpern ergaben die tribologischen Untersuchungen, dass das gepfropfte PTFE-Poly-GMA-Material einen vergleichbaren Gleitreibungskoeffizient zu der physikalischen Mischungen aufweist, dass aber eine erhöhte Verschleißfestigkeit zu beobachten ist. Der Verschleiß beim Klötzchen/Ring-Versuch mit dem chemisch gekoppelten Material wies eine Senkung auf 68 % im Vergleich zu dem Material aus Vergleichsbeispiel 4 auf.
Die weiterführenden tribologischen Untersuchungen an dieser Probe, zu der während der Einarbeitung in die Epoxidharz-Matrix noch 0,5 Ma.-% PFPE (Perfluorpolyether, DuPont) zugegeben wurde, ergaben, dass diese Probekörper einen Gleitreibungskoeffzienten im Vergleich zu dem nur chemisch gekoppelten Material um ca. 35 % niedrigere Werte aufweist und dass eine Zunahme der Verschleißfestigkeit zu beobachten ist. Der Verschleiß beim Klötzchen/Ring-Versuch mit dem chemisch gekoppelten Material und mit dem mit PFPE modifizierten Material wies eine Senkung des Verschleißes auf 58 % im Vergleich zu dem chemisch gekoppelten Material auf.
Nach der Einarbeitung von 15 Ma.-% modifiziertem PTFE-Mikropulver in eine Polyharnstoffharzmischung und nach der Vernetzung in Form einer Platte und Herstellung von Probekörpern ergaben die tribologischen Untersuchungen, dass das gepfropfte PTFE-Poly-GMA-Material in Polyharnstoff vergleichbare Gleitreibungskoeffizienten zu der physikalischen Mischung aufweist, dass aber eine erhöhte Verschleißfestigkeit zu beobachten ist. Der Verschleiß beim Klötzchen/Ring-Versuch mit den chemisch gekoppelten Material weist eine Senkung auf 45 % im Vergleich zu dem Material aus Vergleichsbeispiel 4 auf.
Die weiterführenden tribologischen Untersuchungen an dieser Probe, zu der während der Einarbeitung in die Polyharnstoffharz-Matrix noch 0,5 Ma.-% PFPE (Perfluorpolyether, DuPont) zugegeben wurde, ergaben, dass diese Probekörper einen Gleitreibungskoeffizienten im Vergleich zu dem nur chemisch gekoppelten Material um ca. 45 % niedrigere Werte aufweist und dass eine Zunahme der Verschleißfestigkeit zu beobachten ist. Der Verschleiß beim Klötzchen/Ring-Versuch mit dem chemisch gekoppelten Material und dem mit PFPE modifizierten Material wies eine Senkung auf 38 % im Vergleich zu dem chemisch gekoppelten Material auf.

### Vergleichsbeispiel 5: Modifizierung von unbestrahlten PTFE-Mikropulvem mit Acrylsäure (AAc)

In einem Literkolben werden 100 g thermisch abgebautes PTFE-Polymerisat (TF 9205 von Dyneon, unbestrahlt) in 500 ml DMAc bei Raumtemperatur dispergiert/gerührt, entgast und mit Stickstoff gespült. Die PTFE-DMAc-Dispersion wird auf 100°C erwärmt, und es werden 50 ml AAc (frisch destilliert) zudosiert und 2 Stunden bei 100°C gerührt. Der Feststoff wird abgetrennt und dreimal mit je 500 ml Methanol/Wasser (1:1) und danach dreimal mit je 500 ml Methanol gewaschen und getrocknet. Die IR-spektroskopische Untersuchung der abgetrennten und gereinigten PTFE-Mikropulver ergab reines/unmodifiziertes PTFE, d. h. es fand keine Pfropfreaktion zwischen PTFE und Acrylsäure statt. Es werden keine Polyacrylsäure-Absorptionen im IR-Spektrum gefunden.

### Beispiel 9: Modifizierung von PTFE-Emulsionspolymerisat (bestrahlt mit 500kGy) mit Acrylsäure (AAc)

Versuchsdurchführung und Aufarbeitung erfolgte analog Vergleichsbeispiel 5, es werden jedoch 100 g PTFE-Emulsionspolymerisat (TF 2025 von Dyneon), die mit 500 kGy bestrahlt wurden verwendet.
Die IR-spektroskopische Untersuchung des gereinigten PTFE-Mikropulvers ergab sehr starke Polyacrylsäure-Absorptionen neben dem PTFE als Nachweis für chemisch gekoppeltes PTFE-Polyacrylsäure-Material. Im Vergleichsbeispiel 5 war nur reines PTFE im IR-Spektrum nachweisbar.
Nach der Einarbeitung von 15 Ma.-% modifiziertem PTFE-Mikropulver in PA-6 in einem Laborkneter und Herstellung von Probekörpern ergaben die tribologischen Untersuchungen, dass das gepfropfte PTFE-Poly-AAc-Material in PA-6 einen vergleichbaren Gleitreibungskoeffizienten zu den physikalischen Mischungen aufweist, dass aber eine erhöhte Verschleißfestigkeit zu beobachten ist. Der Verschleiß beim Klötzchen/Ring-Versuch mit dem chemisch gekoppelten Material wies eine Senkung auf 65 % im Vergleich zu dem Material aus Vergleichsbeispiel 5 auf.
Die Abtrennung der ungebundenen PA-6-Matrix vom PTFE-Feststoff mittels Lösen in Ameisensäure und Abtrennung des PTFE-Pulvers ergab im IR-Spektrum, dass starke PA-Absorptionsbanden beobachtet wurden. Das PA war vom Feststoff nach 5-maliger Trennoperation nicht abtrennbar, d. h. durch die reaktive Umsetzung während der Compoundierung des PTFE-Polymer-Pulvers [PTFE-Poly-AAc] mit PA-6 fand eine chemische Kopplung und Kompatibilisierung statt.
Die weiterführenden tribologischen Untersuchungen an dieser Probe, zu denen während der Einarbeitung in die PA-6-Matrix noch 0,5 Ma.-% PFPE (Perfluorpolyether, DuPont) zugegeben wurde, ergaben, dass diese Probekörper einen Gleitreibungskoeffizienten im Vergleich zu dem nur chemisch gekoppelten Material um ca. 55 % niedrigere Werte aufweisen und dass eine Zunahme der Verschleißfestigkeit zu beobachten ist. Der Verschleiß beim Klötzchen/Ring-Versuch mit dem chemisch gekoppelten Material und dem mit PFPE modifizierten Material wies eine Senkung des Verschleißes auf 65 % im Vergleich zu dem chemisch gekoppelten Material auf.

### Beispiel 10: Modifizierung von PTFE-Suspensionspolymerisat (bestrahlt mit 500kGy) mit Acrylsäure (AAc)

Versuchsdurchführung und Aufarbeitung erfolgte analog Vergleichsbeispiel 5, es werden jedoch 100 g PTFE-Suspensionspolymerisat (TF 1750 von Dyneon), die mit 500 kGy bestrahlt wurden, verwendet.
Die IR-spektroskopische Untersuchung des gereinigten PTFE-Mikropulvers ergab starke Polyacrylsäure-Absorptionen neben dem PTFE als Nachweis für chemisch gekoppeltes PTFE-Polyacrylsäure-Material. Im Vergleichsbeispiel 5 war nur reines PTFE im IR-Spektrum nachweisbar.
Nach der Einarbeitung von 15 Ma.-% modifiziertem PTFE-Mikropulver in PA-6 in einem Laborkneter und Herstellung von Probekörpern ergaben die tribologischen Untersuchungen, dass das gepfropfte PTFE-Poly-AAc-Material in PA-6 einen vergleichbaren Gleitreibungskoeffizienten zu den physikalischen Mischungen aufweist, dass aber eine erhöhte Verschleißfestigkeit zu beobachten ist. Der Verschleiß beim Klötzchen/Ring-Versuch mit dem chemisch gekoppelten Material wies eine Senkung auf 72 % im Vergleich zu dem Material aus Vergleichsbeispiel 5 auf.
Die Abtrennung der ungebundenen PA-6-Matrix vom PTFE-Feststoff mittels Lösen in Ameisensäure und Abtrennung des PTFE-Pulvers ergab im IR-Spektrum, dass starke PA-Absorptionsbanden beobachtet wurden. Das PA-6 war vom Feststoff nach 5-maliger Trennoperation nicht abtrennbar, d. h. durch die reaktive Umsetzung während der Compoundierung des PTFE-Polymer-Pulvers [PTFE-Poly-AAc] mit PA-6 fand eine chemische Kopplung und Kompatibilisierung statt.
Die weiterführenden tribologischen Untersuchungen an dieser Probe, zu denen während der Einarbeitung in die PA-6-Matrix noch 0,5 Ma.-% PFPE (Perfluorpolyether, DuPont) zugegeben wurde, ergaben, dass diese Probekörper einen Gleitreibungskoeffizienten im Vergleich zu dem nur chemisch gekoppelten Material um ca. 55 % niedrigere Werte aufweisen und dass eine Zunahme der Verschleißfestigkeit zu beobachten ist. Der Verschleiß beim Klötzchen/Ring-Versuch mit dem chemisch gekoppelten Material und dem mit PFPE modifizierten Material wies eine Senkung des Verschleißes auf 61 % im Vergleich zu dem chemisch gekoppelten Material auf.

### Vergleichsbeispiel 6: Modifizierung von unbestrahlten PTFE-Mikropulvem mit Vinylacetat (VAc)

In einem Literkolben werden 100 g thermisch abgebautes PTFE-Polymerisat (TF 9205 von Dyneon, unbestrahlt) in 500 ml DMAc bei Raumtemperatur dispergiert/gerührt, entgast und mit Stickstoff gespült. Die PTFE-DMAc-Dispersion wird auf 100°C erwärmt, und es werden 100 ml VAc (frisch destilliert) zudosiert und 2 Stunden bei 100°C gerührt. Der Feststoff wird abgetrennt und dreimal mit je 500 ml DMAc und danach dreimal mit je 500 ml Methylenchlorid gewaschen und getrocknet.
Die IR-spektroskopische Untersuchung der abgetrennten und gereinigten PTFE-Mikropulver ergab reines/unmodifiziertes PTFE, d. h. es fand keine Pfropfreaktion zwischen PTFE und VAc statt. Es werden keine Polyvinylacetat-Absorptionen im IR-Spektrum gefunden.

### Beispiel 11: Modifizierung von PTFE-Emulsionspolymerisat (bestrahlt mit 500kGy) mit Vinylacetat (VAc)

Versuchsdurchführung und Aufarbeitung erfolgte analog Vergleichsbeispiel 6, es werden jedoch 100 g PTFE-Emulsionspolymerisat (TF 2025 von Dyneon), die mit 500 kGy bestrahlt wurden, verwendet.
Die IR-spektroskopische Untersuchung des gereinigten PTFE-Mikropulvers ergab sehr starke Polyvinylacetat-Absorptionen neben dem PTFE als Nachweis für chemisch gekoppeltes PTFE-Polyvinylacetat-Material. Im Vergleichsbeispiel 6 war nur reines PTFE im IR-Spektrum nachweisbar.
Das VAc-gepfropfte PTFE-Mikropulver wird in einer konzentrierten Kaliumhydroxid-Lösung (Methanol/Wasser, 1:1) zum PTFE-Polyvinylalkohol (PTFE-Poly-VAl) modifiziert und in dieser Form eingesetzt.
Nach der Einarbeitung von 15 Ma.-% PTFE-Mikropulver in TPU (thermoplastisches Polyurethan) in einem Laborkneter und Herstellung von Probekörpern ergaben die tribologischen Untersuchungen, dass das gepfropfte und modifizierte PTFE-Poly-VAI-Material in TPU einen vergleichbaren Gleitreibungskoeffizienten zu der physikalischen Mischung aufweist, dass aber eine wesentlich erhöhte Verschleißfestigkeit zu beobachten ist. Der Verschleiß beim Klötzchen/Ring-Versuch mit dem chemisch gekoppelten Material wies eine Senkung des Verschleißes auf 35 % im Vergleich zu dem Material aus Vergleichsbeispiel 6 auf.
Nach der Einarbeitung von 15 Ma.-% PTFE-Mikropulver in eine Polyharnstoffharzmischung und nach der Vernetzung in Form einer Platte und Herstellung von Probekörpern ergaben die tribologischen Untersuchungen, dass das chemisch gepfropfte PTFE-Poly-VAI-Material in Polyharnstoff einen vergleichbaren Gleitreibungskoeffizienten zu der physikalischen Mischung aufweist, dass aber eine erhöhte Verschleißfestigkeit zu beobachten ist Der Verschleiß beim Klötzchen/Ring-Versuch mit dem chemisch gekoppelten Material wies eine Senkung des Verschleißes auf 42 % im Vergleich zu dem Material aus Vergleichsbeispiel 6 auf.

### Beispiel 12: Modifizierung von PTFE-Suspensionspolymerisat (bestrahlt mit 500kGy) mit Vinylacetat (VAc)

Versuchsdurchführung und Aufarbeitung erfolgte analog Vergleichsbeispiel 6, es werden jedoch 100 g PTFE-Suspensionspolymerisat (TF 1750 von Dyneon), die mit 500 kGy bestrahlt wurden, verwendet.
Die IR-spektroskopische Untersuchung des gereinigten PTFE-Mikropulvers ergab starke Polyvinylacetat-Absorptionen neben dem PTFE als Nachweis für chemisch gekoppeltes PTFE-Polyvinylacetat-Material. Im Vergleichsbeispiel 6 war nur reines PTFE im IR-Spektrum nachweisbar.
Das VAc-gepfropfte PTFE-Mikropulver wird in einer konzentrierten Kaliumhydroxid-Lösung (Methanol/Wasser, 1:1) zum PTFE-Polyvinylalkohol (PTFE-Poly-VAl) modifiziert und in dieser Form eingesetzt.
Nach der Einarbeitung von 15 Ma.-% PTFE-Mikropulver in TPU (thermoplastisches Polyurethan) in einem Laborkneter und Herstellung von Probekörpern ergaben die tribologischen Untersuchungen, dass das gepfropfte und modifizierte PTFE-Poly-VAI-Material in TPU einen vergleichbaren Gleitreibungskoeffizienten zu der physikalischen Mischung aufweist, dass aber eine wesentlich erhöhte Verschleißfestigkeit zu beobachten ist. Der Verschleiß beim Klötzchen/Ring-Versuch mit dem chemisch gekoppelten Material wies eine Senkung des Verschleißes auf 40 % im Vergleich zu dem Material aus Vergleichsbeispiel 6 auf.

Nach der Einarbeitung von 15 Ma.-% PTFE-Mikropulver in eine Polyharnstoffharzmischung und nach der Vernetzung in Form einer Platte und Herstellung von Probekörpern ergaben die tribologischen Untersuchungen, dass das chemisch gepfropfte PTFE-Poly-VAI-Material in Polyharnstoff einen vergleichbaren Gleitreibungskoeffizienten zu der physikalischen Mischung aufweist, dass aber eine erhöhte Verschleißfestigkeit zu beobachten ist. Der Verschleiß beim Klötzchen/Ring-Versuch mit dem chemisch gekoppelten Material wies eine Senkung des Verschleißes auf 47 % im Vergleich zu dem Material aus Vergleichsbeispiel 6 auf.

### Beispiel 13: Modifizierung von plasmamodiffizierten PTFE-Mikropulvem mit Acrlysäure (AAc)

Versuchsdurchführung und Aufarbeitung erfolgte analog Vergleichsbeispiel 5, es werden jedoch 100 g plasmabehandeltes PTFE (TF 9205, thermisch abgebaut, Dyneon, mit Sauerstoffplasma modifiziert) verwendet.
Die IR-spektroskopische Untersuchung des gereinigten PTFE-Mikropulvers ergab Polyacrylsäure-Absorptionen neben dem PTFE als Nachweis für chemisch gekoppeltes PTFE-Polyacrylsäure-Material. Im Vergleichsbeispiel 5 war nur reines PTFE im IR-Spektrum nachweisbar.
Nach der Einarbeitung von 15 Ma.-% modifiziertem PTFE-Mikropulver in PA-6 in einem Laborkneter und Herstellung von Probekörpern ergaben die tribologischen Untersuchungen, dass das gepfropfte PTFE-Poly-AAc-Material in PA-6 einen vergleichbaren Gleitreibungskoeffizienten zu den physikalischen Mischungen aufweist, dass aber eine erhöhte Verschleißfestigkeit zu beobachten ist. Der Verschleiß beim Klötzchen/Ring-Versuch mit dem chemisch gekoppelten Material wies eine Senkung auf 82 % im Vergleich zu dem Material aus Vergleichsbeispiel 5 auf.
Die Abtrennung der ungebundenen PA-6-Matrix vom PTFE-Feststoff mittels Lösen in Ameisensäure und Abtrennung des PTFE-Pulvers ergab im IR-Spektrum, dass starke PA-Absorptionsbanden beobachtet wurden. Das PA-6 war vom Feststoff nach 5-maliger Trennoperation nicht abtrennbar, d. h. durch die reaktive Umsetzung während der Compoundierung des PTFE-Polymer-Pulvers [PTFE-Poly-AAc] mit PA-6 fand eine chemische Kopplung und Kompatibilisierung statt.

## Patentansprüche

1. Radikalisch gekoppelte PTFE-Polymer-Pulver, erhältlich durch strahlenchemische und/oder plasmachemische Modifizierung von PTFE-Pulvern unter Sauerstoffeinfluss und reaktiver Umsetzung der modifizierten PTFE-Pulver mit Styrol, Acrylnitril, Maleinsäureanhydrid, Acrylsäure, Methyl(meth)acrylat, Vinylacetat, Glycidylmethacrylat, (Meth)Acrylamid-Verbindungen oder deren Gemische als polymerisierbare, olefinisch ungesättigte Monomere in Dispersion oder in Substanz, wobei an der Partikeloberfläche Homo-, Co- oder Ter-Polymere der polymerisierbaren, olefinisch ungesättigten Monomere radikalisch gekoppelt werden.

2. Radikalisch gekoppelte PTFE-Polymer-Pulver nach Anspruch 1, bei denen das PTFE-Pulver strahlenchemisch modifiziert ist.

3. Radikalisch gekoppelte PTFE-Polymer-Pulver nach Anspruch 1, bei denen das PTFE-Pulver mit einer Strahlendosis von größer 50 kGy strahlenchemisch modifiziert ist.

4. Radikalisch gekoppelte PTFE-Polymer-Pulver nach Anspruch 3, bei denen das PTFE-Pulver mit einer Strahlendosis von größer 100 kGy strahlenchemisch modifiziert ist.

5. Verfahren zur Herstellung von PTFE-Polymer-Pulver nach einem der Ansprüche 1 bis 5, bei dem PTFE-Pulver mit reaktiven Perfluoralkyl-(peroxy-)Radikal-Zentren nach einer strahlenchemischen und/oder plasmachemischen Modifizierung in Dispersion oder in Substanz unter Zugabe von Styrol, Acrylnitril, Maleinsäureanhydrid, Acrylsäure, (Meth-)Methylacrylat, Vinylacetat, Glycidylmethacrylat, (Meth-)Acrylamid-Verbindungen oder deren Gemische als polymerisierbare, olefinisch ungesättigte Monomere reaktiv umgesetzt werden, wobei während der reaktiven Umsetzung eine Polymeraufbaureaktion zu Homo-, Co- oder Ter-Polymere am PTFE realisiert wird.

6. Verfahren nach Anspruch 6, bei dem die PTFE-Pulver mit reaktiven Perfluoralkyl-(peroxy-)Radikal-Zentren nach einer strahlenchemischen und/oder plasmachemischen Modifizierung einem Tempern bei niedrigen Temperaturen unter Erhalt der reaktiven Perfluoralkyl-(peroxy-)Radikal-Zentren unterzogen werden.

7. Verfahren nach Anspruch 6, bei dem strahlenchemisch modifiziertes PTFE-Pulver eingesetzt wird.

8. Verfahren nach Anspruch 6, bei dem das PTFE-Pulver mit einer Strahlendosis von größer 50 kGy strahlenchemisch modifiziert wird.

9. Verfahren nach Anspruch 9, bei dem das PTFE-Pulver mit einer Strahlendosis von größer 100 kGy strahlenchemisch modifiziert wird.

10. Verfahren nach Anspruch 11, bei dem das PTFE-Pulver unter Sauerstoffeinfluss strahlenchemisch modifiziert wird.

11. Verfahren nach Anspruch 6, bei dem das PTFE-Pulver als Mikropulver eingesetzt wird.

12. Verfahren nach Anspruch 6, bei dem die Reaktion in einem Autoklav oder in einem Rührreaktor oder in einem Extruder/Kneter realisiert wird.

13. Verfahren nach Anspruch 6, bei dem eine Mischung aus Monomeren eingesetzt wird.

14. Verfahren nach Anspruch 6, bei dem als polymerisierbare, olefinisch ungesättigte Monomere Makromere und/oder Oligomere eingesetzt werden.

15. Verfahren nach Anspruch 6, bei dem die PTFE-Polymer-Pulver mit funktionellen Gruppen versehen sind, die in nachfolgenden Reaktionen mit weiteren niedermolekularen, oligomeren und/oder polymeren Substanzen reaktiv umgesetzt werden.

16. Verwendung der radikalisch gekoppelten PTFE-Polymer-Pulvern gemäß mindestens einem der Ansprüche 1 bis 4 und hergestellt nach einem Verfahren nach mindestens einem der Ansprüche 5 bis 15, zur Einarbeitung über Compoundierung in Kunststoffe/Polymere.

17. Verwendung nach Anspruch 18, zur Einarbeitung in Elastomere und/oder Thermoplaste und/oder Duromere (und/oder Mischungen daraus).

## Claims

1. Radically coupled PTFE polymer powder getting from radiation-chemically and/or plasma-chemically modification under the influence of oxygen and reaction of the PTFE powder with styrene, acrylonitrite, maleic anhydride, acrylic acid, (meth-)methyl acrylat, vinyl acetate, glycidyl methacrylate, (meth-)acrylamide compounds and mixtures thereof are added as polymerizable, olefinically unsaturated monomers in dispersion or in substance, on the particle surfaces of which homopolymers, copolymers or terpolymers of the polymerizable, olefinically unsaturated monomers are radically coupled.

2. Radically coupled PTFE polymer powders according to claim 1, in which the PTFE powder is radiation-chemically modified.

3. Radically coupled PTFE polymer powders according to claim 1, in which the PTFE powder is radiation-chemically modified with a radiation dose greater than 50 kGy.

4. Radically coupled PTFE polymer powders according to claim 1, in which the PTFE powder is radiation-chemically modified with a radiation dose greater than 100 kGy.

5. Method for producing PTFE polymer powders according to one of claims 1 through 4, in which PTFE powders with reactive perfluoralkyl-(peroxy) radical centers are reactively converted after a radiation-chemical and/or plasma-chemical modification in dispersion or substance with the addition of styrene, acrylonitrite, maleic anhydride, acrylic acid, (meth-)methyl acrylat, vinyl acetate, glycidyl methacrylate, (meth-)acrylamide compounds and mixtures thereof as poylmerizable, olefinically unsaturated monomers, whereby during the reaction a polymerforming reaction to homopolymers, copolymers or terpolymers on the PTFE is realized.

6. Method according to claim 5, in which the PTFE powders with reactive perfluoralkyl-(peroxy) radical centers after a radiation-chemical and/or plasma-chemical modification are subjected to a tempering at low temperatures yielding the reactive perfluoralkyl-(peroxy) radical centers.

7. Method according to claim 5, in which radiation-chemically modified PTFE powder is used.

8. Method according to claim 5, in which the PTFE powder is radiation-chemically modified with a radiation dose greater than 50 kGy.

9. Method according to claim 5, in which the PTFE powder is radiation-chemically modified with a radiation dose greater than 100 kGy.

10. Method according to claim 5, in which the PTFE powder is radiation-chemically modified under the influence of oxygen.

11. Method according to claim 5, in which the PTFE powder is used as a micropowder.

12. Method according to claim 5, in which the reaction is realized in an autoclave or in a stirred tank or in an extruder/kneader.

13. Method according to claim 5, in which a mixture of monomers is used.

14. Method according to claim 5, in which macromers and/or oligomers are used as polymerizable, olefinic unsaturated monomers.

15. Method according to claim 5, in which the PTFE powders are provided with functional groups which in subsequent reactions are reacted with other low-molecular, oligomeric and/or polymeric substances.

16. Use of the radically coupled PTFE polymer powders according to one of claims 1 through 4 and according to one of claims 5 through 15 for the incorporation via compounding in plastics/polymers.

17. Use according to claim 16, for the incorporation in elastomers and/or thermoplastics and/or thermosets (and/or mixtures thereof).

## Revendications

1. Poudre polymère de PTFE couplée par voie radicalaire, pouvant être obtenue par modification chimique par des rayonnements et/ou par du plasma sous influence de l'oxygène et transformation réactive de la poudre de PTFE modifiée avec du styrène, de l'acrylonitrile, de l'anhydride de l'acide maléique, de l'acide acrylique, du (méth)acrylate de méthyle, de l'acétate de vinyle, du méthacrylate de glycidyle, des composés de (méth)acrylamide ou leurs mélanges sous la forme de monomères à insaturation oléfinique polymérisables en dispersion ou en substance, des homo-, co- ou ter-polymères des monomères à insaturation oléfinique polymérisables étant couplés par voie radicalaire sur la surface des particules.

2. Poudre polymère de PTFE couplée par voie radicalaire selon la revendication 1, dans laquelle la poudre de PTFE est modifiée chimiquement par des rayonnements.

3. Poudre polymère de PTFE couplée par voie radicalaire selon la revendication 1, dans laquelle la poudre de PTFE est modifiée chimiquement par des rayonnements avec une dose de rayonnements supérieure à 50 kGy.

4. Poudre polymère de PTFE couplée par voie radicalaire selon la revendication 3, dans laquelle la poudre de PTFE est modifiée chimiquement par des rayonnements avec une dose de rayonnements supérieure à 100 kGy.

5. Procédé de fabrication d'une poudre polymère de PTFE selon l'une quelconque des revendications 1 à 5, dans lequel la poudre de PTFE est transformée réactivement avec des centres radicalaires perfluoralkyl-(peroxy) réactifs après une modification chimique par des rayonnements et/ou par du plasma en dispersion ou en substance avec ajout de styrène, acrylonitrile, anhydride de l'acide maléique, acide acrylique, (méth)acrylate de méthyle, acétate de vinyle, méthacrylate de glycidyle, composés de (méth)acrylamide ou leurs mélanges sous la forme de monomères à insaturation oléfinique polymérisables, une réaction de formation polymère qui forme des homo-, co- ou ter-polymères sur le PTFE étant réalisée pendant la transformation réactive.

6. Procédé selon la revendication 5, dans lequel la poudre de PTFE avec des centres radicalaires perfluoralkyl-(peroxy) réactifs est soumise à une recuisson à faibles températures après une modification chimique par des rayonnements et/ou par du plasma avec préservation des centres radicalaires perfluoralkyl-(peroxy) réactifs.

7. Procédé selon la revendication 5, dans lequel une poudre de PTFE modifiée chimiquement par des rayonnements est utilisée.

8. Procédé selon la revendication 5, dans lequel la poudre de PTFE est modifiée chimiquement par des rayonnements avec une dose de rayonnements supérieure à 50 kGy.

9. Procédé selon la revendication 5, dans lequel la poudre de PTFE est modifiée chimiquement par des rayonnements avec une dose de rayonnements supérieure à 100 kGy.

10. Procédé selon la revendication 5, dans lequel la poudre de PTFE est modifiée chimiquement par des rayonnements sous influence de l'oxygène.

11. Procédé selon la revendication 5, dans lequel la poudre de PTFE est utilisée sous la forme d'une micropoudre.

12. Procédé selon la revendication 5, dans lequel la réaction est réalisée dans un autoclave ou dans un réacteur sous agitation ou dans une extrudeuse/malaxeur.

13. Procédé selon la revendication 5, dans lequel un mélange de monomères est utilisé.

14. Procédé selon la revendication 5, dans lequel des macromères et/ou des oligomères sont utilisés en tant que monomères à insaturation oléfinique polymérisables.

15. Procédé selon la revendication 5, dans lequel la poudre polymère de PTFE est munie de groupements fonctionnels qui sont transformés réactivement dans des réactions ultérieures avec d'autres substances de faible poids moléculaire, oligomères et/ou polymères.

16. Utilisation de la poudre polymère de PTFE couplée par voie radicalaire selon au moins l'une quelconque des revendications 1 à 4 et fabriquée par un procédé selon au moins l'une quelconque des revendications 5 à 15, pour une incorporation au moyen d'un formulateur dans des plastiques/polymères.

17. Utilisation selon la revendication 16, pour l'incorporation dans des élastomères et/ou des thermoplastiques et/ou des duromères (et/ou leurs mélanges).
